(19) **Europäisches Patentamt**

**European Patent Office**

**Office européen des brevets**

(11) Veröffentlichungsnummer: **0 301 258 B1**

(12) **EUROPÄISCHE PATENTSCHRIFT**

(45) Veröffentlichungstag der Patentschrift: **23.12.92**

(21) Anmeldenummer: **88110356.8**

(22) Anmeldetag: **29.06.88**

(51) Int. Cl.⁵: **G01F 1/28**

(54) **Verfahren zur Messung des Durchflusses flüssiger Medien.**

(30) Priorität: **22.07.87 DE 3724179**

(43) Veröffentlichungstag der Anmeldung:
**01.02.89 Patentblatt 89/05**

(45) Bekanntmachung des Hinweises auf die
Patenterteilung:
**23.12.92 Patentblatt 92/52**

(84) Benannte Vertragsstaaten:
**AT BE CH DE ES FR GB IT LI NL SE**

(56) Entgegenhaltungen:
**FR-A- 2 480 936**
**GB-A- 2 135 784**
**US-A- 3 766 779**
**US-A- 4 573 361**

(73) Patentinhaber: **Kobold, Klaus**
**Nordring 22-24**
**W-6238 Hofheim/Ts(DE)**

(72) Erfinder: **Kobold, Klaus**
**Nordring 22-24**
**W-6238 Hofheim/Ts(DE)**

(74) Vertreter: **Keil, Rainer A., Dipl.-Phys. Dr. et al**
**KEIL & SCHAAFHAUSEN Patentanwälte Eys-**
**seneckstrasse 31**
**W-6000 Frankfurt am Main 1(DE)**

EP 0 301 258 B1

## Beschreibung

Die Erfindung bezieht sich auf ein Verfahren zur Messung des Durchflusses flüssiger Medien bei dem das zu messende Medium ein einen über seine Länge im wesentlichen gleichen Innendurchmesser aufweisendes kreiszylindrisches Gehäuse (1) durchströmt, in welchem ein Widerstandskörper (4) an der Wandinnenfläche (3) des Gehäuses (1) durch die Strömung des flüssigen Mediums, vorzugsweise gegen die Wirkung einer Feder (2) mit progressiver Kennlinie, dichtend geführt und dadurch der Durchfluß durch die Verschiebung des Widerstandskörpers (4) ermittelt wird, wobei der Widerstandskörper (4) einen einen inneren axial durchgängigen Strömungskanal (5) bildenden Hohlzylinder (6) aufweist und wobei die engste Stelle des Widerstandskörpers (4) von einem im wesentlichen kreiszylindrischen Loch (7) einer in dem Hohlzylinder (6) auswechselbar gehaltenen Lochblende (8) mit gegenüber dem engsten Querschnitt des Strömungskanals (5) wesentlich geringerem, während der Axialbewegung des Widerstandskörpers (4) in dem Gehäuse (1) unverändert freien Lochquerschnitt gebildet ist.

Bekannte Volumendurchflußmesser für das Messen und Überwachen von Flüssigkeitsströmen arbeiten nach dem Schwebekörperprinzip. Bei diesen Geräten bewirkt der Strömungswiderstand, der sich beim Umströmen und/oder Durchströmen des im Meßgerät befindlichen Schwebekörpers ergibt, eine Verschiebung desselben gegenüber einem Meßrohr. Die Verschiebung des Schwebekörpers im Meßrohr ist, da der Strömungswiderstand volumenstromabhängig ist, ein Maß für den Volumendurchfluß. Bei diesen sogenannten Schwebekörpermeßgeräten hält das um den Auftrieb verminderte Gewicht des Schwebekörpers der aus dem Strömungswiderstand resultierenden Kraft das Gleichgewicht. Um eine Zuordnung zwischen Schwebekörperverschiebung und Volumendurchfluß zu erhalten, ist das Führungsrohr des Schwebekörpers innen konisch ausgebildet. Durch besondere zusätzliche Formgebung des Führungsrohrs können eine lineare Anzeige und ein großer Meßbereich realisiert werden. Derartige Geräte müssen jedoch senkrecht eingebaut werden. Sie sind außerdem extrem viskositätsabhängig. Durch eine Federbelastung des Widerstandskörpers kann jedoch auch ein lageunabhängiger Einbau erreicht werden. Eine große Anzahl von bekannten Volumendurchflußmessern, die nach dem Prinzip des Widerstandskörpers arbeiten, benutzen eine Flächenerweiterung bei Erhöhung des Volumendurchflusses, um ausreichend große Meßbereiche zur Verfügung zu haben. Diese Erweiterung wird konstruktiv dadurch verwirklicht, daß der Meßquerschnitt als Ringspalt ausgebildet wird. Der Strömungswiderstand, der beim Durchströmen eines Ringspaltes auf den Widerstandskörper ausgeübt wird, ist insbesondere bei kleinerem Volumendurchfluß jedoch nicht viskositätsunabhängig. So sind auch bei Geräten dieser Bauart, die im Hinblick auf eine weitgehende Viskositätsunabhängigkeit entwickelt wurden, bei kleinem Volumendurchfluß bis zu 500% Abweichung in der Anzeige bei hochviskosen Ölen gegenüber dem Wert bei gleichem Wasserdurchfluß festzustellen.

Nach dem Verdrängungsprinzip arbeitende Volumendurchflußmeßgeräte z.B. Ovalradzähler, sind zwar viskositätsunabhängig, sie sind jedoch aufwendig und damit teuer. Außerdem kann der Volumendurchfluß nur durch zusätzliche Meßwertverarbeitung gewonnen werden, da der Verdrängungsmesser selbst lediglich die Durchflußmenge über der Zeit integriert. Eine kostengünstige Messung und Überwachung ist mit dieser Art von Durchflußmessern bisher nicht zur erreichen.

Bei Durchflußmessern der erfindungsgemäßen Gattung läuft der Widerstandskörper mit einer sehr engen Passung im Führungsgehäuse. Ein Ringspalt zwischen Widerstandskörper und Führungsgehäuse wird vermieden. Damit wird der gesamte Meßstrom durch das Loch der Lochblende geführt. Da der Lochdurchmesser klein ist im Vergleich zum Innendurchmesser des Widerstandskörpers, ist der Strömungswiderstand im Innenteil des Widerstandskörpers vernachlässigbar gegenüber dem Strömungswiderstand, der durch das Durchströmen der Lochblende entsteht. Die Strömungskraft am Widerstandskörper wird damit praktisch allein durch den Druckverlust in der Lochblende erzeugt. Soll der Durchflußmesser lageunabhängig einsetzbar sein, wirkt dem Widerstandskörper eine Feder entgegen, die vorzugsweise mit progressiver Kennlinie ausgestattet ist um einen für die praktische Anwendung ausreichenden Meßbereich mit entsprechender Auflösung in der Meßanzeige zu erhalten. Die verwendete Feder kann eine kegelförmige Druckfeder sein. Die Feder ist dabei so ausgelegt, daß eine lineare Abhängigkeit zwischen Hub des Widerstandskörpers und dem Volumendurchfluß erzielt wird. Die Feder kann einerseits im Gehäuse und andererseits am Widerstandskörper eingehängt sein. Der Schwebekörper kann auch mit Permanentmagneten bestückt sein, die einen außerhalb des Gehäuses angeordneten potentialfreien Schutzgaskontakt (Reed-Switch) betätigen, so daß eine hermetische Trennung zwischen dem Medium und der elektrischen Kontakteinrichtung gegeben ist.

Aus der DE-OS 29 46 826 ist ein Durchflußwächter für flüssige oder gasförmige Medien bekannt, welcher aus einem in den Strömungsweg des jeweiligen Mediums einschaltbaren Gehäuse, einem in dem Gehäuse ausgehend von einer vorgebbaren Ruhelage gegen die Kraft einer Vorspannfeder durchflußabhängig verschiebbaren Meßgeber und wenigstens einer außerhalb des Strömungsraums angeordneten, in Abhängigkeit von der Bewegung des Meßgebers betätigbaren Auswertevorrichtung besteht, wobei der beweglich gelagerte Meßgeber die Form einer Flachblende mit wenigstens einer Öffnung besitzt, und wobei diese Flachblende unter Ausbildung eines Distanzspaltes zu der Wandung des Strömungsraums mittels der Vorspannfeder zentrierend gehalten ist. Hierdurch soll einerseits auch bei hohem Verschmutzungsgrad des Mediums bzw. bei einem hohen Anteil an Beimengungen keinerlei Verklemmungs- oder Verkantungseffekt auftreten und andererseits auch bei stark schwankenden Viskositätswerten des jeweiligen Mediums eine einwandfreie Arbeitsweise gewährleistet werden, d.h. daß hinsichtlich der Schalthysterese zwischen Einschalt- und Ausschaltpunkt sowie hinsichtlich des Druckverlustes bei höheren Strömungsmengen im Vergleich zu bisher bekannten Geräten wesentlich bessere Eigenschaften gewährleistet werden sollen. Die Stärke der Flachblende soll dabei vorzugsweise klein gegenüber dem Durchmesser der Flachblende sein. Mit einem derartigen Durchflußwächter läßt sich bei hinreichender Meßgenauigkeit insbesondere bei geringem Volumendurchfluß nicht zuverlässig eine viskositätsunabhängige Messung erreichen.

Das gleiche trifft für die Durchflußmesser nach der US-A-3 766 779 zu, mit welcher u.a. vorgeschlagen wird, für unterschiedliche Viskositäten Lochblenden mit unterschiedlicher Konfiguration und Größe des Lochs zu verwenden. Es ist jedoch nicht erkennbar, für welche Viskositätsbereiche welche Lochblenden verwendet werden sollen, um eine weitgehend viskositätsunabhängige Meßgenauigkeit zu erzielen.

Die US-A-4 573 361 beschreibt einen Schwebekörper-Durchflußmesser, bei welchem eine möglichst viskositätsunabhängige Messung dadurch erzielt werden soll, daß das Verhältnis von Dicke der Lochblende zu Durchmesser des Loches einen vorgegebenen Wert von 0,5 nicht überschreiten und vorzugsweise sogar nur im Bereich von 0,1 bis 0,3 liegen soll. Es sind jedoch noch höhere Meßgenauigkeiten und -empfindlichkeiten für unterschiedliche Viskositätsbereiche erwünscht, als mit diesem Gerät erzielt werden können.

Deswegen ist es Aufgabe der vorliegenden Erfindung, ein Verfahren zur Messung des Durchflusses flüssiger Medien vorzuschlagen, mit welchem auch bei geringen Durchflußmengen mit hoher Meßgenauigkeit und -empfindlichkeit eine weitgehend viskositätsunabhängige Messung in unterschiedlichen Meßbereichen möglich ist.

Diese Aufgabe wird erfindungsgemäß bei einem Verfahren der eingangs genannten Art im wesentlichen dadurch gelöst, daß man jeweils eine solche Lochblende verwendet, daß ausgehend von einer Untergrenze von $10^{-6}\,\mathrm{m^2/s}$ (1 cSt.) mit zunehmender Obergrenze des zu erfassenden Viskositätsbereichs des zu messenden flüssigen Mediums das Verhältnis von Dicke der Lochblende zu Durchmesser des Loches steigt, jedoch zwischen etwa 0,05 und 1,0 liegt, wobei insbesondere das Verhältnis von Dicke der Lochblende zu Durchmesser des Loches für einen Viskositätsbereich des zu messenden Mediums von etwa $10^{-6}$ (1 cSt) bis 2 x $10^{-4}\,\mathrm{m^2/s}$ (200 cSt.) bei etwa 0,5, für einen Viskositätsbereich von etwa $10^{-6}$ (1 cSt) bis $10^{-3}\,\mathrm{m^2/s}$ (1000 cSt.) bei etwa 0,7 und für einen Viskositätsbereich von etwa $10^{-6}$ (1 cSt) bis 2 x 5 x $10^{-3}\,\mathrm{m^2/s}$ (2500 cSt.) bei etwa 1 liegt und für andere Viskositätsbereiche entsprechend dazwischen.

Ist der Viskositätsbereich, innerhalb welchem die Durchflußmessung mit einer vorgegebenen Lochblende mit hinreichender Genauigkeit ausgeführt werden kann, ausgehend von $10^{-6}\,\mathrm{m^2/s}$ (1 cSt.), also verhältnismäßig klein, liegt er also beispielsweise zwischen etwa $10^{-6}$ (1 cSt) bis 2 x $10^{-4}\,\mathrm{m^2/s}$ (200 cSt.), und soll der Viskositätsbereich, innerhalb dessen mit dem gattungsgemäßen Durchflußmesser innerhalb gewünschter Genauigkeit gemessen werden kann, erweitert werden, also beispielsweise auf einen Bereich von $10^{-6}$ (1 cSt) bis $10^{-3}\,\mathrm{m^2/s}$ (1000 cSt.), so ist nach der erfindungsgemäßen Lehre zu einer Lochblende überzugehen, für welche das Verhältnis von Dicke der Lochblende zu Durchmesser des Loches größer aber immer noch kleiner als 1 ist.

Mit der Erfindung wird ferner vorgeschlagen, jeweils solche Lochblenden zu verwenden, daß für zunehmenden zu erfassenden maximalen Volumendurchfluß der Durchmesser des Loches, und die Dicke der Lochblende zunimmt. Dies bedeutet, daß für einen vorgegebenen Viskositätsbereich und vorgegebenen maximalen Volumendurchfluß eines Durchflußmessers der erfindungsgemäßen Art ein größerer maximaler Volumendurchfluß bei hinreichender viskositätsunabhängiger Meßgenauigkeit dadurch gewährleistet werden kann, daß man zu einer Lochblende übergeht, deren Lochdurchmesser, aber auch deren Dicke größer ist, als die zuvor verwendete Lochblende.

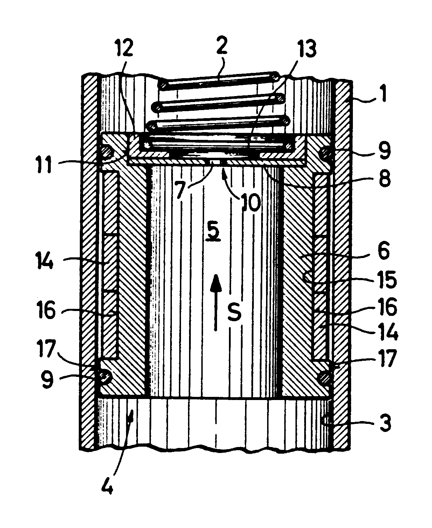

Weitere Ziele, Merkmale, Vorteile und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Die einzige Figur veranschaulicht im Vertikalschnitt einen zur Durchführung des erfindungsgemäßen Verfahrens geeigneten Widerstandskörper in einem oben und unten weggebrochenen rohrförmigen Führungsgehäuse des Durchflußmessers.

Der Durchflußmesser hat ein senkrechtes von unten nach oben von dem zu messenden Medium in Pfeilrichtung S zu durchströmendes, jedenfalls innen zylinderrohrförmiges Gehäuse 1. Der Innendurchmesser des Gehäuses 1 ist über seine Länge im wesentlichen konstant. In dem Gehäuse 1 wird durch die Strömung des flüssigen Mediums gegen die Wirkung einer konischen Feder 2 mit progressiver Kennlinie ein Widerstandskörper 4 dichtend geführt. Der Widerstandskörper 4 hat einen einen inneren axial durchgängigen Strömungskanal 5 bildenden Hohlzylinder 6. Die engste Stelle des Widerstandskörpers 4 wird von dem im wesentlichen kreiszylindrischen Loch 7 einer in dem Hohlzylinder 6 auswechselbar gehaltenen Lochblende 8 gebildet. Der freie (kleinste) Lochquerschnitt des Loches 7 ist gegenüber dem engsten Querschnitt des Strömungskanals 5 wesentlich geringer, so daß der Strömungswiderstand des Widerstandskörpers 4 praktisch ausschließlich von der Lochblende 8 bestimmt wird. Der freie Lochquerschnitt der Lochblende 8 bleibt bei der Axialbewegung des Widerstandskörpers 4 in dem Gehäuse 1 unverändert.

Die Führung des Widerstandskörpers 4 an der Wandinnenfläche 3 erfolgt mit zwei in seinem Außenumfang in axialem Abstand angeordneten O-Ringen 9, welche gleichzeitig für eine Abdichtung gegenüber der Innenwandfläche 3 des Gehäuses 1 sorgen, so daß die Strömung ausschließlich durch das Loch 7 der Lochblende 8 geführt wird.

Die Lochberandung 10 des Loches 7 der Lochblende 8 ist im dargestellten Falle kreiszylindrisch. Die kann jedoch auch leicht abgerundet sein.

Die flache, außen kreisförmige Lochblende 8 ist in einer stirnseitigen Vertiefung 11 des Hohlzylinders 6 vorzugsweise kraftschlüssig aufgenommen. Sie ist (zusätzlich) in der Vertiefung 11 von einem in diese kraftschlüssig einsetzbaren Passungsring 12 gehalten.

Die Öffnung 13 des Fassungsrings 12 als Teil des Hohlzylinders 6 bildet in diesem Fall den engsten Querschnitt des Strömungskanals 5, der jedoch ebenfalls wesentlich größer ist, als der Querschnitt des Loches 7 der Lochblende 8, so daß auch durch den Passungsring 12 der Strömungswiderstand des Widerstandskörpers 4 nicht wesentlich mitbestimmt wird.

Der Hohlzylinder 6 weist in seiner Wandaußenfläche 17 eine nutförmige Vertiefung 16 auf, in welcher drei axial magnetisierte Magnetringe 14 zwischen den beiden O-Ringen 9 aneinanderliegend angeordnet sind. Sie wahren dabei einen geringen Abstand von der Wandinnenfläche 3 des führenden Gehäuses 1, so daß sie zur Reibung des Widerstandskörpers 4 an der Wandinnenfläche 3 des Gehäuses 1 nichts beitragen.

Bezugszeichenliste:

| | |
|---|---|
| 1 | Gehäuse |
| 2 | Feder |
| 3 | Wandinnenfläche |
| 4 | Widerstandskörper |
| 5 | Strömungskanal |
| 6 | Hohlzylinder |
| 7 | Loch |
| 8 | Lochblende |
| 9 | O-Ringe |
| 10 | Lochberandung |
| 11 | Vertiefung |
| 12 | Passungsring |
| 13 | Öffnung |
| 14 | Magnetringe |
| 15 | Öffnung |
| 16 | Vertiefung |
| 17 | Wandaußenfläche |

**Patentansprüche**

1. Verfahren zur Messung des Durchflusses flüssiger Medien bei dem das zu messende Medium ein einen über seine Länge im wesentlichen gleichen Innendurchmesser aufweisendes kreiszylindrisches Gehäuse (1) durchströmt, in welchem ein Widerstandskörper (4) an der Wandinnenfläche (3) des Gehäuses (1) durch die Strömung des flüssigen Mediums, vorzugsweise gegen die Wirkung einer Feder (2) mit progressiver Kennlinie, dichtend geführt und dadurch der Durchfluß durch die Verschiebung des Widerstandskörpers (4) ermittelt wird, wobei der Widerstandskörper (4) einen einen inneren axial durchgängigen Strömungskanal (5) bildenden Hohlzylinder (6) aufweist und wobei die engste Stelle des Widerstandskörpers (4) von einem im wesentlichen kreiszylindrischen Loch (7) einer in dem Hohlzylinder (6) auswechselbar gehaltenen Lochblende (8) mit gegenüber dem engsten Querschnitt des Strömungskanals (5) wesentlich geringerem, während der Axialbewegung des Widerstandskörpers (4) in dem Gehäuse (1) unverändert freien Lochquerschnitt gebildet ist, dadurch gekennzeichnet, daß man jeweils eine solche Lochblende (8) verwendet, daß ausgehend von einer Untergrenze von $10^{-6}\,\mathrm{m^2/s}$ (1 cSt.) mit zunehmender Obergrenze des zu erfassenden Viskositätsbereichs des zu messenden flüssigen Mediums das Verhältnis von Dikke der Lochblende (8) zu Durchmesser des Loches (7) steigt, jedoch zwischen etwa 0,05 und 1,0 liegt, wobei insbesondere das Verhältnis von Dicke der Lochblende (8) zu Durchmesser des Loches (7) für einen Viskositätsbereich des zu messenden Mediums von etwa $10^{-6}$ (1 cSt) bis 2 x $10^{-4}$ m²/s (200 cSt.) bei etwa 0,5, für einen Viskositätsbereich von etwa $10^{-6}$ (1 cSt) bis $10^{-3}$ m²/s (1000 cSt.) bei etwa 0,7 und für einen Viskositätsbereich von etwa $10^{-6}$ (1 cSt) bis 2,5 x $10^{-3}$ m²/s (2500 cSt.) bei etwa 1 liegt und für andere Viskositätsbereiche entsprechend dazwischen.

2. Verfahren nach Anspruch 1, dadurch gekennzeichnet, daß man jeweils eine solche Lochblende (8) verwendet, daß für zunehmenden zu erfassenden maximalen Volumendurchfluß der Durchmesser des Loches (7) und die Dicke der Lochblende (8) zunimmt.

## Claims

1. A process for measuring the flow rates of fluids, whereby the fluid to be monitored is passed through a circular-section cylindrical housing (1) of nominally constant internal diameter, in which is disposed a plug (4) sliding in a leak-proof manner along the inner wall surface (3) of the housing (1) when displaced by the stream of fluid, preferably against the reaction of a spring (2) with a progressive spring characteristic, so that the displacement of the plug (4) is a measure of the flow rate, the plug (4) consisting of a hollow cylinder (6) having an inner axially disposed through channel (5) and a throttle in the form of an interchangeable orifice plate (8) with a nominally circular-section cylindrical orifice (7) of substantially smaller diameter than the channel (5) in the hollow cylinder (6), the orifice cross-section remaining constant over the axial displacement path of the plug (4) in the housing (1), characterized in that the ratio between the thickness of the orifice plate (8) and the diameter of the orifice (7), which ranges between about 0.05 and 1.0 within the set of orifice plates (8), is increased as the upper limit of the viscosity range of the fluids to be monitored increases above the lower limit of $10^{-6}$ m²/s (1 cSt.), the ratio between the thickness of the orifice plate (8) and the diameter of the orifice (7) being more specifically about 0.5 for a fluid viscosity range from about $10^{-6}$ m²/s (1 cSt.) to 2 x $10^{-4}$ m²/s (200 cSt.), about 0.7 for a fluid viscosity range from about $10^{-6}$ m²/s (1 cSt.) to $10^{-3}$ m²/s (1000 cSt.), about 1 for a fluid vi cosity range from about $10^{-6}$ m²/s (1 cSt.) to 2.5 x $10^{-3}$ m²/s (2500 cSt.) and between these values for other viscosity ranges, in proportion thereto.

2. A process as in Claim 1, characterized in that as the maximum flow rate to be monitored increases the diameter of the orifice (7) in the selected orifice plate (8) and the thickness of the said orifice plate (8) are both increased.

## Revendications

1. Procédé de mesure du débit de liquides selon lequel le liquide à mesurer s'écoule à l'intérieur d'un boîtier (1) cylindrique circulaire de diamètre intérieur sensiblement constant sur l'ensemble de sa longueur et dans lequel un corps (4) opposant une résistance est guidé avec étanchéité sur la paroi du boîtier (1) et est déplacé par l'écoulement du liquide de préférence à l'encontre de la force d'un ressort (2) à caractéristique progressive, le débit étant ainsi déterminé par le déplacement du corps (4) opposant une résistance, le corps (4) opposant une résistance étant pourvu d'un cylindre creux (6) formant un conduit intérieur (5) parcouru axialement et le point le plus étroit du corps (4) opposant une résistance étant constitué par un trou (7) essentiellement cylindrique circulaire d'un diaphragme (8) monté avec possibilité de remplacement dans le cylindre creux (6), lequel trou a une section libre qui est considérablement plus petite que la plus faible section du conduit (5) et reste constante pendant le déplacement axial du corps (4) opposant une résistance, caractérisé par le fait que l'on utilise un diaphragme (8) tel que, partant d'une limite inférieure de $10^{-6}$ m²/s (1 cSt), le rapport de l'épaisseur du diaphragme (8) au diamètre du trou (7) croît lorsque la limite supérieure de la plage de viscosité considérée du liquide à mesurer augmente, en étant compris toutefois entre environ 0,05 et 1,0, le rapport de l'épaisseur du diaphragme (8) au diamètre du trou (7) étant d'environ 0,5 pour une plage de viscosité du fluide à mesurer allant de environ $10^{-6}$ m²/s (1 cSt) à 2 * $10^{-4}$ m²/s (200 cSt), d'environ 0,7 pour une plage de viscosité allant de environ $10^{-6}$ m²/s (1 cSt) à $10^{-3}$ m²/s (1000 cSt) et d'environ 1 pour une plage de viscosité allant de environ $10^{-6}$ m²/s (1 cSt) à 2,5 * $10^{-3}$ m²/s (2500 cSt) et étant compris entre ces valeurs pour d'autres plages de viscosité.

2. Procédé selon la revendication 1, caractérisé par le fait que l'on utilise un diaphragme (8) tel que le diamètre du trou (7) et l'épaisseur du diaphragme (8) augmentent lorsque le débit volumique maximal à mesurer augmente.